# EUROPÄISCHE PATENTANMELDUNG

(11) **EP 2 541 738 A2**
(43) Veröffentlichungstag der Anmeldung: **02.01.2013**
(21) Anmeldenummer: 12172545.1
(22) Anmeldetag: 19.06.2012
(51) Int. Cl.: H02K 5/26

(54) **Montagevorrichtung sowie Maschinenanordnung mit einer solchen Montagevorrichtung**

(30) Priorität: 29.06.2011 DE 102011107379; 09.07.2011 DE 102011106998
(71) Anmelder: STEMPLINGER Gesellschaft für Konstruktion, Verzahnungs- und Fertigungstechnik mbH, 94051 Hauzenberg - Industriegebiet Jahrdorf (DE)
(72) Erfinder: Stefan, Thomas, 94051 Hauzenberg (DE); Donaubauer, Michael, 94107 Untergriesbach (DE); Stemplinger, Johann, 94051 Hauzenberg (DE)
(74) Vertreter: Graf Glück Habersack Kritzenberger

(57) **Zusammenfassung**

Montagevorrichtung zum ausgerichteten Montieren von elektrischen Maschinen, insbesondere von Elektromotoren an einer Basis.

## Beschreibung

Die Erfindung bezieht sich auf eine Montagevorrichtung gemäß Oberbegriff Patentanspruch 1 sowie auf eine Maschinenanordnung gemäß Oberbegriff Patentanspruch 14.

Speziell bei Maschinenanordnungen mit elektrischen Maschinen, beispielsweise mit Elektromotoren, die über einen Riemenantrieb mit einem weiteren Maschinenelement oder Aggregat verbunden sind, ist es notwendig, die Wellen der elektrischen Maschine und des weiteren Aggregates oder Maschinenelementes exakt auszurichten, beispielsweise durch Ausrichten der elektrischen Maschine, um einen geradlinigen Riemenverlauf sicher zu stellen und zu vermeiden, dass bei Zahnriemenantrieben der jeweilige Riemen oder Zahnriemen über die Stirnfläche der Riemenscheiben hinausläuft.

Aufgabe der Erfindung ist es, einen Montageschlitten bzw. eine Montagevorrichtung aufzuzeigen, die ein Ausrichten und insbesondere auch eine Feinjustierung der jeweiligen elektrischen Maschine oder einer anderen Maschine mit hoher Genauigkeit ermöglicht. Zur Lösung dieser Aufgabe ist eine Montagevorrichtung entsprechend dem Patentanspruch 1 ausgebildet. Eine Maschinenanordnung mit einer solchen Montagevorrichtung ist Gegenstand des Patentanspruches 14.

In Weiterbildung der Erfindung ist die Montagevorrichtung sowie die Maschinenanordnung so ausgeführt,
dass die Vorrichtungselemente jeweils von einem einzigen plattenförmigen Element gebildet sind,
und/oder
dass das zweite Vorrichtungselement für die Verstellung, vorzugsweise für eine lineare Verstellung in einer ersten Achsrichtung verschiebbar an dem dritten Vorrichtungselement geführt ist,
und/oder
dass das erste Vorrichtungselement für eine Verstellung, vorzugsweise für eine lineare Verstellung in einer zweiten Achse an der Basis oder an dem Maschinengestell vorgesehen i st,
und/oder
dass die Vorrichtungselemente der Montagevorrichtung in der dritten Achse aufeinander folgend vorgesehen sind,
und/oder
dass das dritte Vorrichtungselement über eine wenigstens drei räumlich gegeneinander versetzte Verstelleinheiten aufweisende Lageranordnung an dem ersten Vorrichtungselement gehalten ist, und dass die die wenigstens drei Verstelleinheiten aufweisende Lageranordnung zumindest für ein Schwenken des dritten Vorrichtungselementes und damit auch des zweiten Vorrichtungselementes um die dritte Achse ausgebildet ist, vorzugsweise auch für ein Schwenken oder Kippen des dritten Vorrichtungselementes und damit des zweiten Vorrichtungselementes um Achsen radial zur dritten Achse,
u nd/oder
dass das dritte Vorrichtungselement über die wenigstens drei räumlich gegeneinander versetzte Verstelleinheiten aufweisende Lageranordnung von dem ersten Vorrichtungselement in der dritten Achse (Z-Achse) beabstandet ist,
und/oder
dass das zweite Vorrichtungselement gegenüber dem dritten Vorrichtungselement verstellbar ausgebildet ist,
und/oder
dass das zweite Vorrichtungselement als austauschbarer Adapter mit an die Art und/oder Lage der Befestigungsanschlüsse an der jeweiligen elektrischen Maschine angepassten mechanischen Befestigungen ausgebildet ist,
und/oder
dass jede Verstelleinheit ein in seiner Länge verstellbares Distanzstück aufweist, welches sich mit einem Ende, vorzugsweise mit einem kugelkarlottenartig geformten ersten Ende an dem ersten Vorrichtungselement oder an einem dortigen Lager und mit einem zweiten, vorzugsweise ebenfalls kugelkarlottenförmig ausgebildeten Ende an dem dritten Vorrichtungselement an einem dortigen Lager abstützt, und dass das jeweilige Distanzstück für die Einstellung des dritten Vorrichtungselementes relativ zum ersten Vorrichtungselement relativ zu diesen Vorrichtungselementen schwenkbar ausgebildet ist, u nd/oder
dass das durch ein das jeweilige Distanzstück durchgreifendes Spannelement zum Verspannen des ersten und dritten Vorrichtungselementes über das zwischen diesen Vorrichtungselementen angeordnete Distanzstück,
u nd/oder
dass für die Verstellung des zweiten Vorrichtungselementes relativ zu dem dritten Vorrichtungselement und/oder für die Verstellung des dritten Vorrichtungselementes relativ zum ersten Vorrichtungselement,
und/oder
dass das erste Vorrichtungselement eine Grundplatte, das zweite Vorrichtungselement eine Montageplatte und das dritte Vorrichtungselement eine Zwischenplatte sind,
und/oder
dass durch eine Führung zwischen dem ersten und dem dritten Vorrichtungselement, wobei die Führung eine Verstellung des dritten Vorrichtungselementes in der dritten Achse sowie ein Verschwenken des dritten Vorrichtungselementes um die dritte Achse ermöglicht, und/oder
dass die Montagevorrichtung nach einem der vorhergehenden Ansprüche ausgebildet ist, und/oder
dass die antriebsmäßige Verbindung zwischen der elektrischen Maschine und dem Aggregat ein Zahnriemenantrieb ist,
wobei die vorgenannten Merkmale jeweils für sich oder in beliebiger Kombination vorgesehen werden können.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:

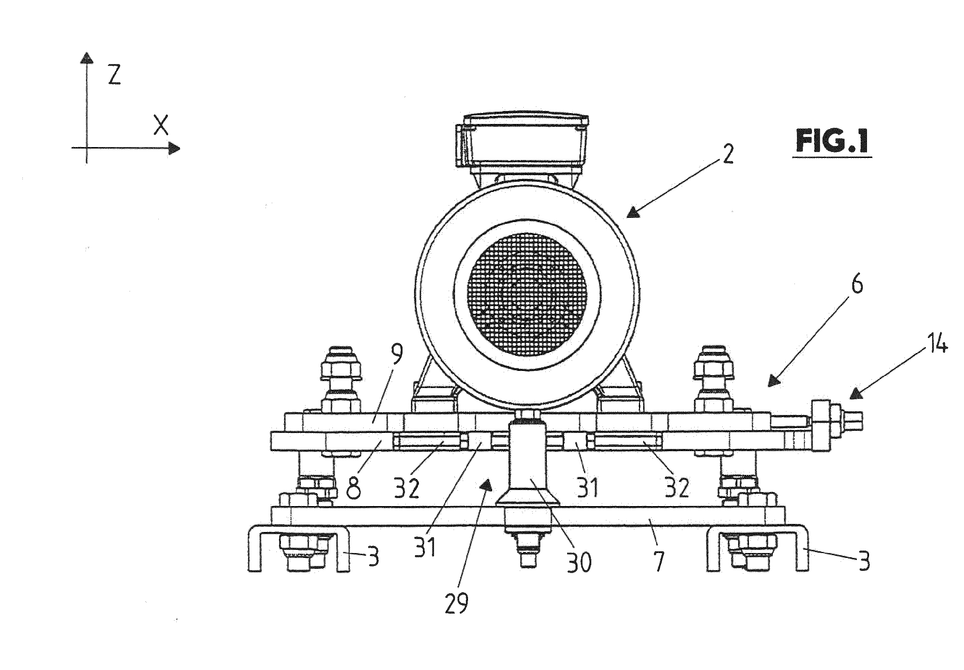

- Fig. 1: eine Montageanordnung mit einer an einer Montagevorrichtung entsprechend der Erfindung montierten elektrischen Maschine in Form eines Elektromotors;
- Fig. 2: eine Draufsicht auf den Elektromotor, die Montagevorrichtung, zusammen mit einem vom Elektromotor angetriebenen Aggregat;

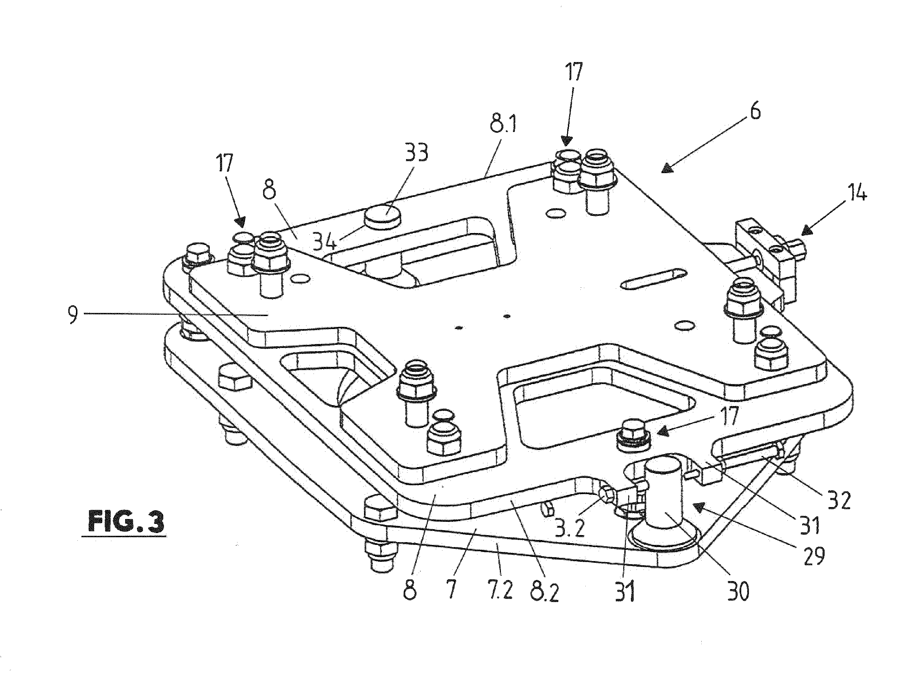

- Fig. 3: in perspektivischer Einzeldarstellung die Montagevorrichtung;

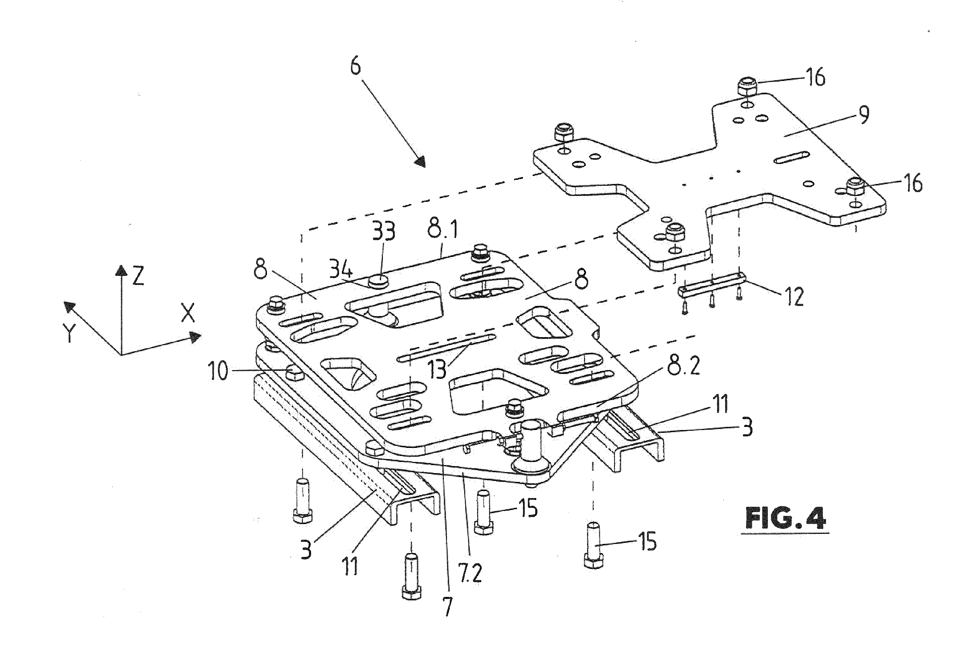

- Fig. 4: die Montagevorrichtung der Figuren 3, bei abgenommener Montageplatte;
- Fig. 5: in Einzeldarstellung eine Verstelleinheit.

Zum besseren Verständnis sind in den Figuren drei senkrecht zueinander verlaufende Raumachsen, nämlich die X-Achse, Y-Achse und Z-Achse wiedergegeben, wobei die X-Achse und die Y-Achse beispielsweise horizontale oder im Wesentlichen horizontale Achsen sind und dementsprechend eine horizontale oder im Wesentlichen horizontale XY-Ebene definieren und die Z-Achse beispielsweise eine vertikale oder im Wesentlichen vertikale Achse ist.

Die in den Figuren allgemein mit 1 bezeichnete Maschinen- oder Montageanordnung ermöglicht ein ausgerichtetes Montieren von elektrischen Maschinen, z.B. von Elektromotoren 2 an einer Basis, beispielsweise an einem Maschinenrahmen und/oder -gestell, von dem in den Figuren lediglich zwei, jeweils von einem U-Profil gebildete und sich Richtung der Y-Achse erstreckende Rahmenelemente 3 dargestellt sind.

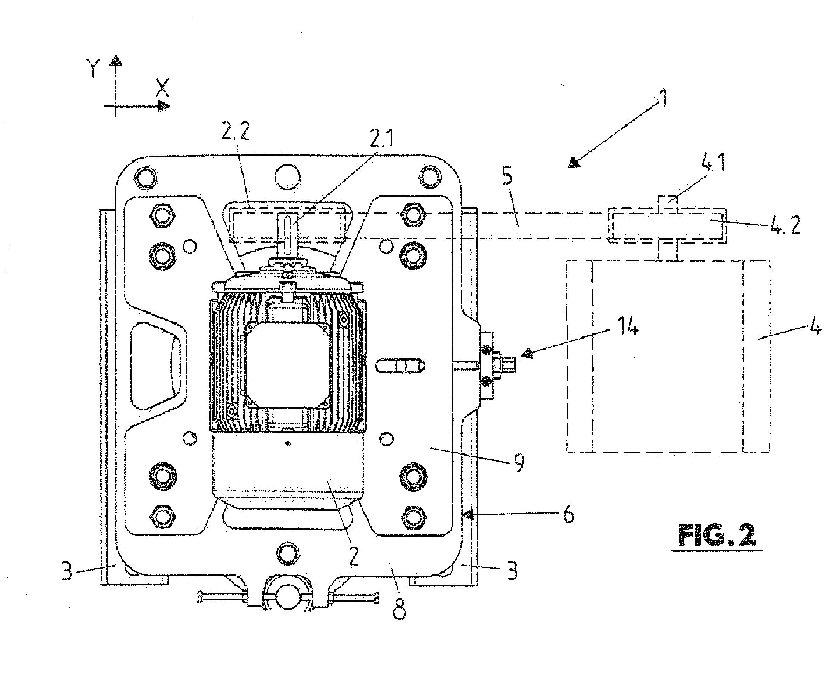

Der Elektromotor 2 ist mit seiner Welle 2.1 antriebsmäßig über einen Zahnriemenantrieb mit der angetriebenen Welle 4.1 eines Aggregats 4, beispielsweise eines Lüfters oder Gebläses verbunden, wie dies in der Figur 2 schematisch mit den an den Wellen 2.1 und 4.1 vorgesehenen Zahnriemenrädern 2.2 bzw. 4.2 und mit dem Zahnriemen 5 dargestellt ist. Dieser Zahnriemenantrieb erfordert ein sehr genaues Ausrichten der Wellen 2.1 und 4.1 zueinander, und zwar insbesondere derart, dass die Achsen der beiden Wellen 2.1 und 4.1 exakt parallel zueinander orientiert sind und darüber hinaus auch ein exakt vorgegebener Achsabstand zwischen den Wellen 2.1 und 4.1 eingehalten ist.

Für die Montage des Elektromotors 2 ist am Vorrichtungs- oder Maschinengestell bzw. an den Rahmenelementen 3 eine Montagevorrichtung 6 vorgesehen, die bei der dargestellten Ausführungsform aus insgesamt drei Vorrichtungs- oder Tragelementen besteht, die in Richtung der Z-Achse aufeinander folgend bzw. übereinander angeordnet und als Platten ausgeführt sind, nämlich aus einer Grundplatte 7, aus einer Pendel- oder Zwischenplatte 8 und aus einer Montageplatte 9, an deren Oberseite der Elektromotor 2 in geeigneter Weise, z.B. mit Befestigungsschrauben, befestigt ist. Bei der dargestellten Ausführungsform sind die Grundplatte 7 und die Zwischenplatte 8 quadratisch oder im Wesentlichen quadratisch und die Montageplatte 9 H-förmig oder im Wesentlichen H-förmig ausgebildet.

Die Montagevorrichtung 6 erlaubt ein Einstellen bzw. Ausrichten des Elektromotors 2 bzw. der Welle 2.1 in mehreren und um mehrere Achsen, d.h. ein Einstellen in der X-Achse, Y-Achse und Z-Achse sowie ein Schwenken um diese Achsen. Die Grundplatte 7 ist mit Maschinenschrauben 10 und zugehörigen Muttern an Langlöchern 11 der Rahmenelemente 3 befestigt, wodurch eine Einstellung der Montagevorrichtung 6 insgesamt und damit auch des Elektromotors 2 bzw. der Welle 2.1 in der Y-Achse möglich ist. Die Montageplatte 9 liegt mit ihrer Unterseite auf der Oberseite der Zwischenplatte 8 auf und ist auf dieser gleitend einstellbar, und zwar in einer Achsrichtung radial zur Welle 2.1, d.h. bei in der XY-Ebene ausgerichteter Zwischenplatte 8 in Richtung der X-Achse. Für diese Verstellung ist die Montageplatte 9 mit einer Passfeder 12 in einem Langloch 13 der Zwischenplatte 8 geführt. Weiterhin ist für die Verstellung ein zwischen der Zwischenplatte 8 und der Montageplatte 9 wirkender Spindelantrieb 14 vorgesehen. Die jeweils getroffene Einstellung der Montageplatte 9 relativ zu Zwischenplatte 8 wird durch Verspannen der beiden Platten mit Langlöcher in der Zwischenplatte und in der Montageplatte 9 durchgreifende Gewindebolzen 15 und 16 gesichert.

Die Zwischenplatte 8 ist über eine Lageranordnung bestehend aus drei Verstelleinheiten 17 einstellbar an der Grundplatte 7 gehalten. Diese zwischen der Zwischenplatte 8 und der Grundplatte 7 angeordnete Verstelleinheiten 17 sind räumlich derart versetzt vorgesehen, dass sie die Eckpunkte eines Dreiecks und bei der dargestellten Ausführungsform die Eckpunkte eines gleichseitigen Dreiecks bilden. Zwei Verstelleinheiten 17 befinden sich dabei an der der Welle 2.1 benachbarten und in einer Achsrichtung radial zur Achse dieser Welle verlaufenden Seite 8.1 der und der entsprechenden Seite 7.1 der Grundplatte 7. Das weitere Verstellelement 17 ist mittig im Bereich der der Seite 8.1 gegenüberliegenden Seite 8.2 der Zwischenplatte 8 und im Bereich der entsprechenden Seite 7.2 der Grundplatte 7 vorgesehen.

Die Verstellelemente 17 sind so ausgebildet, dass sie ein Schwenken der Zwischenplatte 8 relativ zur Grundplatte 7 um eine Achse senkrecht zu den Oberflächenseiten der Grundplatte 7, d.h. um die Z-Achse, zugleich auch ein Schwenken der Zwischenplatte 8 um Achsen radial zu der Z-Achse sowie ein Verstellen der Zwischenplatte 8 in den X-, Y- und Z-Achsen ermöglichen. Hierfür besteht jede Verstelleinheit 17 u.a. aus einem hülsenartigen, in seiner Länge veränderbaren Distanzstück 18, welches seinerseits von einer hülsenartigen Verstellmutter 19 und einem hülsenartigen Verstellbolzen 20 gebildet ist. Die Verstellmutter 19 ist mit ihrem Innengewinde auf dem Außengewinde des Verstellbolzens 20 geführt. Sowohl die Verstellmutter 19 als auch der Verstellbolzen 20 sind an den beiden Enden des Verstellelementes 19 jeweils mit einem kugelkarlottenartigen Endstück versehen und liegen mit diesem Endstück an Lagerringen 21 (Kegelpfannen) an, die an den einander gegenüberliegenden Oberflächenseiten der Grundplatte 7 und der Zwischenplatte 8 in dortigen stufenförmigen ausgebildeten Bohrungen 22 angeordnet sind. Durch Verstellen der Verstellmutter 19 relativ zum Verstellbolzen 20 kann die wirksame Länge des jeweiligen Distanzstückes 18 und damit der Abstand zwischen der Grundplatte 7 und der Zwischenplatte 8 verändert werden. Durch eine auf dem Verstellbolzen 20 vorgesehene Kontermutter 23 ist die jeweilige Längeneinstellung des Distanzstückes 18 fixierbar.

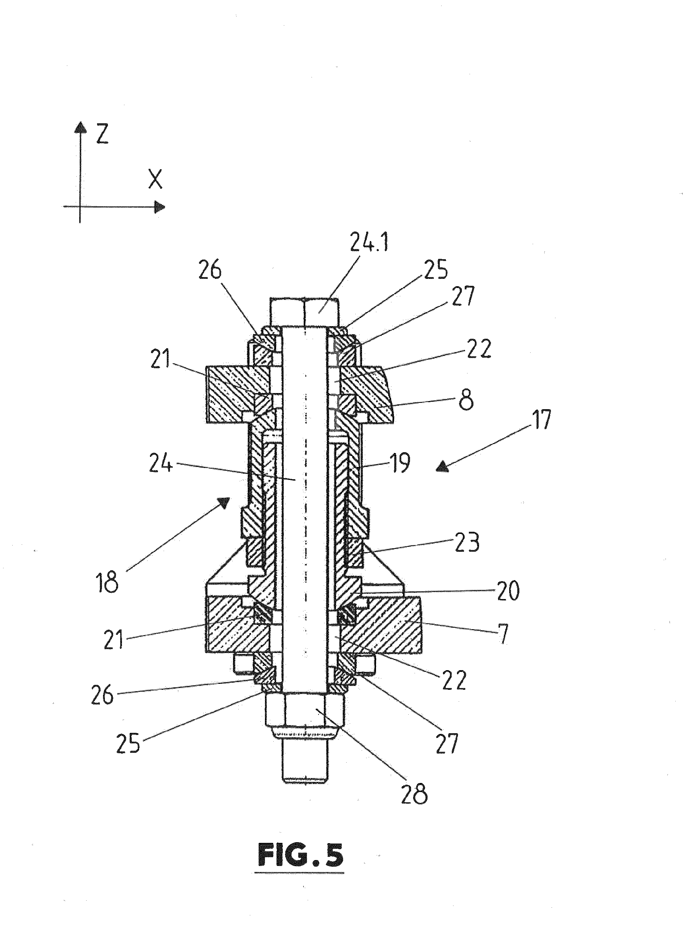

Zum Verspannen der Zwischenplatte 8 mit der Grundplatte 7 ist ein die Bohrungen 22 sowie auch das hülsenartige Distanzstück 18 durchgreifender Spannbolzen 24 vorgesehen, der sich mit seinem Bolzenkopf 24.1 über eine Scheibe 25 und eine Kugelscheibe 26 an einem Lagerring 27 abstützt, der seinerseits gegen die Grundplatte 7 abgewandte Oberseite der Zwischenplatte 8 anliegt. An dem unteren, über die Unterseite der Grundplatte 7 vorstehenden Ende ist auf dem Spannbolzen 24 eine Spannmutter 28 vorgesehen, die sich in analoger Weise über eine Scheibe 25, eine Kugelscheibe 26 und einen Lagerring 27 an der Zwischenplatte 8 abgewandten Unterseite der Grundplatte 7 abstützt. Wie insbesondere in der Figur 5 auch dargestellt, besitzt der Spannbolzen 24 bzw. dessen Gewindeschaft einen Querschnitt, der kleiner ist als der Lochdurchmesser der Bohrungen 22, der Scheiben 25 und 26 sowie auch kleiner ist als der Innendurchmesser der Verstellmutter 19 und des Verstellbolzens 20.

Bei gelockerter Spannmutter 28 sind durch Verschwenken der Verstellelemente 17 bzw. deren Distanzstücke 18 insbesondere ein Schwenken der Zwischenplatte 8 und damit auch der Montageplatte 9 und des Elektromotors 2 um die Z-Achse sowie ein Verstellen der Zwischenplatte 8 und damit auch der Montageplatte 9 und des Elektromotors 2 in Richtung der X- und Y-Achsen möglich. Weiterhin ist bei gelockerten Spannmuttern 28 durch Änderung der Länge wenigstens eines Distanzstückes 18 ein Kippen der Zwischenplatte 8 und damit der Montageplatte 9 und des Elektromotors 2 um Achsen radial zur Z-Achse möglich, wobei die jeweilige Einstellung dann durch Spannen der Spannmutter 28 bzw. des Spannbolzens 24 fixiert wird.

Die Montagevorrichtung 6 ist so ausgebildet und die Verstelleinheiten 17 sind so angeordnet, dass die Spannbolzen 24 und deren Köpfe 24.1 sowie die Spannmuttern 28 bei jeder getroffenen Einstellung zugänglich bleiben.

Um insbesondere auch das Schwenken der Zwischenplatte 8 und damit auch der Montageplatte 9 und des Elektromotors 2 relativ zur Grundplatte 7 um die Z-Achse feinfühlig vornehmen zu können und die jeweils getroffene Einstellung zusätzlich zu sichern, ist eine zwischen der Grundplatte 7 und der Zwischenplatte 8 wirkende Verstelleinrichtung 29 vorgesehen. Diese besteht bei der dargestellten Ausführungsform aus einem an der Grundplatte 7 bzw. an einer dreieckförmigen die Seite 7.2 bildenden Verlängerung befestigten Zapfen 30, der mit seiner Achse senkrecht zu den Oberflächenseiten der Grundplatte 7, d.h. in Richtung der Z-Achse, orientiert ist und über der Zwischenplatte 8 zugewandte Oberseite der Grundplatte 7 vorsteht. Mit seinem freien Ende ist der Zapfen 30 zwischen zwei Vorsprüngen 31 angeordnet, die an der Seite 8.2 der Zwischenplatte 8 ausgebildet sind. Jeder Vorsprung 31 ist mit einer Gewindebohrung für eine Verstellschraube 32 versehen, die mit ihrer Achse parallel zur Seite 8.2 und radial zur Achse des Zapfens 30 orientiert ist und mit einem Ende gegen den Zapfen 30 anliegt. Durch Verstellen der Verstellschrauben 32 ist bei gelockerten Spannmuttern 28 das Schwenken der Zwischenplatte 8 und damit der Montageplatte 9 und des Elektromotors 2 um die Z-Achse bei einem Verschwenken der Verstelleinrichtungen 17 möglich.

Bei der dargestellten Ausführungsform ist an der Grundplatte 7 ein weiterer Zapfen 33 vorgesehen, der in eine Bohrung 34 der Zwischenplatte 8 eingreift, so dass die Zwischenplatte 8 hierdurch in der Z-Achse an der Grundplatte 7 geführt ist, wobei der Zapfen 33 einen definierte Schwenkachse festlegt, um die das Verschwenken der Zwischenplatte 8 relativ zur Grundplatte 7 um die Z-Achse erfolgt, sowie beim Verstellen auch ein zumindest übermäßiges Verschwenken der Zwischenplatte 8 um Achsen in der XY-Ebene vermeidet, d.h. die parallele Lage der Zwischenplatte 8 zu der Grundplatte 7 sichert oder im Wesentlichen sichert.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrundeliegende Erfindungsgedanke verlassen wird. So ist es beispielsweise möglich, dass die Montageplatte 9 nicht nur gegenüber der Zwischenplatte 8 verstellbar auszubilden, sonder auch als austauschbare Adapterplatte mit mechanischen Befestigungen (15, 16) auszubilden, die von Adapterplatte zu Adapterplatte nach Art und/oder Lage unterschiedlich und an die Art und/oder Lage der Befestigungsanschlüsse an der jeweiligen elektrischen Maschine 2 angepasst sind, so dass lediglich durch Austausch der Montageplatte 9 die Montagevorrichtung 6 problemlos an unterschiedliche elektrische Maschinen 2 angepasst werden kann.

### Bezugszeichenliste

- 1: Maschinenanordnung
- 2: Elektromotor
- 2.1: Welle
- 2.2: Zahnriemenrad
- 3: Rahmenelement
- 4: Aggregat
- 4.1: Welle
- 4.2: Zahnriemenrad
- 5: Zahnriemen
- 6: Montagevorrichtung
- 7: Grundplatte
- 7.1, 7.2: Seite der Grundplatte 7
- 8: Zwischenplatte
- 8.1, 8.2: Seite der Zwischenplatte 8
- 9: Montageplatte
- 10: Maschinenschraube
- 11: Langloch
- 12: Passfeder
- 13: Langloch
- 14: Spindelantrieb
- 15: Gewindebolzen
- 16: Mutter
- 17: Verstelleinheit
- 18: Distanzstück der Verstelleinheit 17
- 19: Verstellmutter
- 20: Verstellbolzen
- 21: Lagerring oder Kegelpfanne
- 22: Bohrung
- 23: Kontermutter
- 24: Spannbolzen
- 24.1: Kopf des Spannbolzens 24
- 25: Scheibe
- 26: Kugelscheibe
- 27: Lager oder Kegelpfanne
- 28: Spannmutter
- 29: Verstelleinrichtung
- 30: Zapfen
- 31: Vorsprung
- 32: Verstellschraube
- 33: Zapfen
- 34: Bohrung
- X, Y, Z: Achse

## Patentansprüche

1. Montagevorrichtung zum ausgerichteten Montieren von elektrischen Maschinen (2), insbesondere von Elektromotoren an einer Basis (3), **gekennzeichnet, durch** wenigstens drei Vorrichtungselemente (7, 8, 9), von denen ein erstes Vorrichtungselement (7) zur Befestigung der Montagevorrichtung (6) an der Basis (3) und ein zweites Vorrichtungselement (9) zum Befestigen der elektrischen Maschine (2) an der Montagevorrichtung (6) dienen, wobei ein drittes zwischen dem ersten und dem zweiten Vorrichtungselement (7, 9) angeordnetes Vorrichtungselement (8) in und/oder um wenigstens eine Achse (X-Achse, Y-Achse, Z-Achse) relativ zum ersten Vorrichtungselement (7) einstellbar und/oder schwenkbar ist, und wobei das zweite Vorrichtungselement (9) in wenigstens einer Achse (X-Achse) relativ zu dem dritten Vorrichtungselement verstellbar ist.

2. Montagevorrichtung nach Anspruch 1, **dadurch gekennzeichnet, dass** das zweite Vorrichtungselement (9) für die Verstellung, vorzugsweise für eine lineare Verstellung in einer ersten Achsrichtung (X-Achse) verschiebbar an dem dritten Vorrichtungselement (8) geführt ist.

3. Montagevorrichtung nach Anspruch 1 oder 2, **dadurch gekennzeichnet, dass** das erste Vorrichtungselement (7) für eine Verstellung, vorzugsweise für eine lineare Verstellung in einer zweiten Achsen (Y-Achse) an der Basis oder an dem Maschinengestell (3) vorgesehen ist.

4. Montagevorrichtung nach einem der vorhergehenden Ansprüche, **dadurch gekennzeichnet, dass** die Vorrichtungselemente (7, 8, 9) der Montagevorrichtung (6) in der dritten Achse (Z-Achse) aufeinander folgend vorgesehen sind.

5. Montagevorrichtung nach einem der vorhergehenden Ansprüche, **dadurch gekennzeichnet, dass** das dritte Vorrichtungselement (8) über eine wenigstens drei räumlich gegeneinander versetzte Verstelleinheiten (17) aufweisende Lageranordnung an dem ersten Vorrichtungselement (7) gehalten ist, und dass die die wenigstens drei Verstelleinheiten (17) aufweisende Lageranordnung zumindest für ein Schwenken des dritten Vorrichtungselementes (8) und damit auch des zweiten Vorrichtungselementes (9) um die dritte Achse (Z-Achse) ausgebildet ist, vorzugsweise auch für ein Schwenken oder Kippen des dritten Vorrichtungselementes (8) und damit des zweiten Vorrichtungselementes (9) um Achsen radial zur dritten Achse (Z-Achse).

6. Montagevorrichtung nach einem der vorhergehenden Ansprüche, **dadurch gekennzeichnet, dass** das dritte Vorrichtungselement (8) über die wenigstens drei räumlich gegeneinander versetzte Verstelleinheiten aufweisende Lageranordnung von dem ersten Vorrichtungselement (7) in der dritten Achse (Z-Achse) beabstandet ist,.

7. Montagevorrichtung nach einem der vorhergehenden Ansprüche, **dadurch gekennzeichnet, dass** jede Verstelleinheit ein in seiner Länge verstellbares Distanzstück (18) aufweist, welches sich mit einem Ende, vorzugsweise mit einem kugelkarlottenartig geformten ersten Ende an dem ersten Vorrichtungselement (7) oder an einem dortigen Lager (21) und mit einem zweiten, vorzugsweise ebenfalls kugelkarlottenförmig ausgebildeten Ende an dem dritten Vorrichtungselement (8) an einem dortigen Lager (21) abstützt, und dass das jeweilige Distanzstück (18) für die Einstellung des dritten Vorrichtungselementes (8) relativ zum ersten Vorrichtungselement (7) relativ zu diesen Vorrichtungselementen schwenkbar ausgebildet ist.

8. Montagevorrichtung nach Anspruch 7, **gekennzeichnet durch** ein das jeweilige Distanzstück (18) durchgreifendes Spannelement (24, 28) zum Verspannen des ersten und dritten Vorrichtungselementes (7, 8) über das zwischen diesen Vorrichtungselementen angeordnete Distanzstück (18).

9. Montagevorrichtung nach einem der vorhergehenden Ansprüche, **gekennzeichnet durch** Verstelleinrichtungen (14, 29) für die Verstellung des zweiten Vorrichtungselementes (8) relativ zu dem dritten Vorrichtungselement (8) und/oder für die Verstellung des dritten Vorrichtungselementes (8) relativ zum ersten Vorrichtungselement (7).

10. Montagevorrichtung nach einem der vorhergehenden Ansprüche, **dadurch gekennzeichnet, dass** die Vorrichtungselemente (7, 8, 9) jeweils von einem einzigen plattenförmigen Element gebildet sind, wobei das erste Vorrichtungselement vorzugsweise eine Grundplatte (7), das zweite Vorrichtungselement vorzugsweise eine Montageplatte (9) und das dritte Vorrichtungselement vorzugsweise eine Zwischenplatte (8) sind.

11. Montagevorrichtung nach einem der vorhergehenden Ansprüche, **dadurch gekennzeichnet, dass** das zweite Vorrichtungselemente (9) flächig gegen das dritte Vorrichtungselement (8) anliegt.

12. Montagevorrichtung nach einem der vorhergehenden Ansprüche, **gekennzeichnet durch** eine Führung (33, 34) zwischen dem ersten und dem dritten Vorrichtungselement (7, 8), wobei die Führung (33, 34) eine Verstellung des dritten Vorrichtungselementes (8) in der dritten Achse (Z-Achse) sowie ein Verschwenken des dritten Vorrichtungselementes (8) um die dritte Achse (Z-Achse) ermöglicht.

13. Montagevorrichtung nach einem der vorhergehenden Ansprüche, **dadurch gekennzeichnet, dass** das zweite Vorrichtungselement (9) gegenüber dem dritten Vorrichtungselement (8) verstellbar und/oder als austauschbarer Adapter mit an die Art und/oder Lage der Befestigungsanschlüsse an der jeweiligen elektrischen Maschine (2) angepassten mechanischen Befestigungen (15, 16) ausgebildet ist.

14. Maschinenanordnung mit einer auf einer Montagevorrichtung (6) montierten elektrischen Maschine (2) und mit einem antriebsmäßig mit der elektrischen Maschine (2) verbundenen Aggregat (4), **dadurch gekennzeichnet, dass** die Montagevorrichtung (6) nach einem der vorhergehenden Ansprüche ausgebildet ist.

15. Maschinenanordnung nach Anspruch 11, **dadurch gekennzeichnet, dass** die antriebsmäßige Verbindung zwischen der elektrischen Maschine (2) und dem Aggregat (4) ein Zahnriemenantrieb ist.
